# EUROPÄISCHE PATENTSCHRIFT

(11) **EP 4 361 600 B1**
(45) Veröffentlichungstag und Bekanntmachung des Hinweises auf die Patenterteilung: **28.08.2024**
(21) Anmeldenummer: 22203842.4
(22) Anmeldetag: 26.10.2022
(51) Int. Cl.: G01N 21/01, G01N 21/47, H01R 13/627, G01N 21/53

(54) **SENSORPOSITIONIERVORRICHTUNG UND SENSOR**
SENSOR POSITIONING DEVICE AND SENSOR
DISPOSITIF DE POSITIONNEMENT DE CAPTEUR ET CAPTEUR

(43) Veröffentlichungstag der Anmeldung: 01.05.2024
(73) Patentinhaber: Exner & Tottewitz Besitz GBR, 76275 Ettlingen (DE)
(72) Erfinder: TOTTEWITZ, Michael, 76646 Bruchsal (DE); EXNER, Detlef, 71297 Mönsheim (DE); CREMERS, Gabriel, 76359 Marxzell (DE); GÜNEY, Yasar, 76275 Ettlingen (DE)
(74) Vertreter: LBP Lemcke, Brommer & Partner Patentanwälte mbB

(56) Entgegenhaltungen:
- EP-A1- 3 553 160
- DE-A1- 102016 008 826
- DE-A1- 102020 107 763
- DE-A1- 4 242 083

## Beschreibung

Die Erfindung betrifft eine Sensorpositioniervorrichtung gemäß Anspruch 1 und eine Sensoreinheit gemäß Anspruch 13.

Sensoren werden beispielsweise in chemischen, biotechnischen und pharmazeutischen Anlagen verwendet, insbesondere zur Ermittlung von Zustandsgrößen wie beispielsweise die Konzentration eines Mediums.

Innerhalb der Anlagen werden Prozessbehälter verwendet, um in ihnen chemische, biologische oder pharmazeutische Prozesse ablaufen zu lassen.

Grundsätzlich können Prozessbehälter zur mehrmaligen Nutzung ausgelegt sein, jedoch ist es insbesondere im Bereich der pharmazeutischen Anwendung üblich, sogenannte Einwegprozessbehälter zu verwenden.

Vorteilhaft ist bei der Verwendung von Einwegbioreaktoren, dass die Rüstzeiten verkürzt werden können. Dies wird ermöglicht, da aufwändige Reinigungs- und Sterilisierungsarbeiten wegfallen.

Übliche Sensoren für Prozessbehälter, welche für mehrmaliges Nutzen ausgelegt sind, sind kostenintensiv und somit nicht für die einmalige Anwendung in Einwegprozessbehältern geeignet. Die benötigten Schnittstellen, die sogenannten Anschlussstutzen zum Anschluss der Sensoren an den Prozessbehälter unterliegen für Prozessbehälter, welche für eine mehrmalige Verwendung ausgelegt sind, einem Standard. Für Einwegprozessbehälter kann die Ausführung des Anschlussstutzens jedoch je nach Hersteller des Einwegprozessbehälters variieren.

Die meisten herkömmlichen Sensoren für Prozessbehälter, welche für eine mehrmalige Verwendung ausgelegt sind, stehen in direktem Kontakt mit dem Medium (invasiv) innerhalb des Prozessbehälters und werden zusammen mit dem Prozessbehälter bereitgestellt und vor Beginn des Prozesses sterilisiert. Einwegprozessbehälter werden vorsterilisiert geliefert und müssen daher bereits einen Sensor aufweisen, wenn keine zusätzliche Sterilisation erforderlich sein soll. Bei nachträglichem Anordnen eines Sensors an einen bereits sterilisierten Einwegprozessbehälter besteht der Nachteil, dass eine erneute Sterilisation mit Sensor erfolgen muss.

Des Weiteren führen prozessbedingte Temperaturänderungen zu ungewollten Materialausdehnungen der Sensorkomponenten im Inneren des Sensors. Dies führt insbesondere bei faseroptischen Sensoren zu ungewollten Positionsänderungen der Fasern, dies bedarf einer aufwendigen Kompensation der Änderung, um eine gleichbleibende Messgenauigkeit zu erreichen.

Beispielsweise ist in US 4707134 ein faseroptischer Sensor beschrieben, welcher ein Ausgleichselement verwendet, um die Fasern an einer gewünschten Position zu halten. Nachteilig ist bei dieser Ausführung jedoch, dass der vorgeschlagene Mechanismus nur für invasive Sensoren einsetzbar ist.

DE 10 2016 008826 A1 betrifft einen Bioreaktor- und/oder Mischbehälter, in dessen Außenwandung eine Spektroskopiezelle angeordnet ist, und eine entsprechende Spektroskopiezelle sowie ein Spektroskopieverfahren für einen Behälter. DE 4242 083 A1 betrifft eine Sensorvorrichtung zur Messung der Interaktion infraroter Strahlung mit menschlicher Haut.

Ausgehend von diesem Stand der Technik liegt der vorliegenden Erfindung die Aufgabe zugrunde, ein Sensor bereitzustellen, welcher es ermöglicht, nicht invasive Messungen innerhalb eines Prozessbehälters durchzuführen. Zudem liegt der vorliegenden Erfindung die Aufgabe zugrunde, eine Vorrichtung bereitzustellen, welche es ermöglicht, einen solchen Sensor einfach und positionsgenau zu positionieren. Weiter liegt der vorliegenden Erfindung die Aufgabe zugrunde, eine Vorrichtung vorzuschlagen, um Sensoren in einer einfachen Art und Weise mehrfach nutzbar an Einwegprozessbehältern zu verwenden.

Gelöst wird diese Aufgabe erfindungsgemäß durch eine Sensorpositioniervorrichtung gemäß Anspruch 1 sowie durch eine Sensoreinheit gemäß Anspruch 13.

Vorzugsweise Ausgestaltungen der erfindungsgemäßen Sensorpositioniervorrichtung finden sich in den Ansprüchen 2 bis 12. Vorzugsweise Ausgestaltungen der erfindungsgemäßen Sensoreinheit finden sich in den Ansprüchen 13 bis 16. Hiermit wird der Wortlaut sämtlicher Ansprüche explizit per Referenz in die Beschreibung einbezogen.

Die erfindungsgemäße Sensorpositioniervorrichtung weist eine Haltebaugruppe auf, welche eine Sensoraufnahme, ein Befestigungselement und ein Federelement aufweist. Weiter weist die Sensoraufnahme einen Hohlraum zur Aufnahme eines Sensors, insbesondere eines optischen Sensors auf. Die Sensoraufnahme ist gegenüber dem Befestigungselement entlang einer Ausgleichsachse verschiebbar gelagert. Weiterhin ist das Federelement zwischen Befestigungselement und Sensoraufnahme und mit diesen zusammenwirkend angeordnet, um eine Rückstellkraft bei Verschieben der Sensoraufnahme relativ zu dem Befestigungselement entlang der Ausgleichsachse auszubilden.

Wesentlich ist hier, dass die Sensorpositioniervorrichtung einen Messstutzen mit einem Anschlag aufweist, wobei der Messstutzen zur Anordnung an einen Prozessbehälter ausgebildet ist. Ferner ist wesentlich, dass der Messstutzen zur lösbaren Anordnung an der Haltebaugruppe ausgebildet ist. Weiter ist wesentlich, dass die Sensorpositioniervorrichtung derart ausgebildet ist, dass bei Anordnung des Messstutzens an der Haltebaugruppe die Sensoraufnahme relativ zu dem Befestigungselement entlang der Ausgleichsachse bewegbar ist und dass mittels des Federelementes eine Anpresskraft der Sensoraufnahme an den Anschlag des Messstutzens ausgebildet wird.

Vorteilhaft ist, dass über die Sensoraufnahme der Sensorpositioniervorrichtung Sensoren an einem Prozessbehälter angebracht werden können, welche nicht invasive Messungen durchführen.

Vorteilhaft ist zudem, dass durch das Beaufschlagen der Sensoraufnahme mit einer Anpresskraft eine gleichbleibende Positionierung an dem Anschlag des Messstutzens erzielt wird. Durch die gleichbleibende Positionierung werden vorteilhafterweise auch die Temperatur bedingten Ausdehnungen der Materialien ausgeglichen.

Vorteilhaft ist zudem, dass Positionierungenauigkeiten durch das Anpressen der Sensoraufnahme an den Anschlag des Messstutzens bei der Anordnung des Messstutzens an die Haltebaugruppe ausgeglichen werden, um somit die Reproduzierbarkeit von Messungen zu erhöhen.

Vorteilhaft ist zudem, dass die Haltebaugruppe von dem Messstutzen lösbar ausgestaltet ist, um diese an weiteren Messstutzen zu befestigen. Da die Haltebaugruppe nicht unmittelbar in Kontakt zu dem zu prüfenden Medium steht, kann auf eine Sterilisation über beispielsweise ein Autoklavieren der Haltebaugruppe verzichtet werden, somit können kostengünstige Materialien Anwendung finden und die Produktionskosten gesenkt werden.

In einer bevorzugten Ausführungsform ist das Befestigungselement als eine Kupplungsmuffe und der Messstutzen als ein Kupplungsstecker oder das Befestigungselement als ein Kupplungsstecker und der Messstutzen als eine Kupplungsmuffe ausgebildet, wobei der Kupplungsstecker in die Kupplungsmuffe einführbar ist. Weiter weist die Sensorpositioniervorrichtung eine Verriegelungsvorrichtung auf, wobei die Verriegelungsvorrichtung ausgebildet ist, um in einer Verriegelungsposition den Kupplungsstecker formschlüssig mit der Kupplungsmuffe zu verriegeln. Ferner ist die Verriegelungsvorrichtung ausgebildet, um in einer Entriegelungsposition den Kupplungsstecker und die Kupplungsmuffe zu entriegeln.

In einer abgewandelten Ausführungsform ist das Befestigungselement als ein Kupplungsstecker und der Messstutzen als eine Kupplungsmuffe ausgebildet, wobei der Kupplungsstecker des Befestigungselements in die Kupplungsmuffe des Messstutzens einführbar ist. Weiter weist der Messstutzen eine Verriegelungsvorrichtung auf, wobei die Verriegelungsvorrichtung ausgebildet ist, um in einer Verriegelungsposition den Kupplungsstecker formschlüssig mit der Kupplungsmuffe zu verriegeln. Ferner ist die Verriegelungsvorrichtung ausgebildet, um in einer Entriegelungsposition den Kupplungsstecker und die Kupplungsmuffe zu entriegeln.

Vorteilhaft bei der vorgenannten bevorzugten Ausführungsform und bei der abgewandelten Ausführungsform ist, dass durch die Ausführungsform in einfacher Art und Weise die Haltebaugruppe an dem Messstutzen angeordnet werden kann. Weiter bietet die Ausführungsform den Vorteil eines schnellen Anbringens bzw. schnellen Lösens der Haltebaugruppe, insbesondere, wenn mit dem Sensor in einem kurzen Zeitraum mehrere Messungen an verschiedenen Prozessbehältern oder in verschiedenen Messstutzen desselben Prozessbehälters durchgeführt werden.

In einer bevorzugten Ausführungsform ist der Messstutzen lösbar über eine Schnellkuppelverbindung, eine Rastverbindung, eine Bajonettverbindung oder eine Schraubverbindung zur Anordnung an der Haltebaugruppe ausgebildet.

Vorteilhaft ist bei dieser Ausführungsform, dass durch die Verbindungsformen in einfacher Art und Weise die Haltebaugruppe an dem Befestigungselement angeordnet werden kann. Insbesondere bietet die Ausführungsform mit Schnellkuppelverbindung den Vorteil, dass somit ein schnelles Anbringen bzw. schnelles Lösen des Sensors möglich ist. Vorteilhaft ist zudem, dass insbesondere bei der Verwendung der Schnellkuppelverbindung eine Einhandpositionierung des Sensors innerhalb des Messstutzens möglich ist.

In einer bevorzugten Ausführungsform ist die Haltebaugruppe zur Anordnung des Messstutzens über eine Schnellkuppelverbindung, eine Rastverbindung, eine Bajonettverbindung oder eine Schraubverbindung ausgebildet.

Diese Ausführungsform weist ebenso die vorgenannten Vorteile in Bezug auf die Verbindungsform auf.

In einer bevorzugten Ausführungsform ist der Hohlraum der Sensoraufnahme einseitig mit einem optischen Element, insbesondere einem Messfenster der Sensoraufnahme abgeschlossen.

Vorteilhaft ist bei dieser Ausführungsform, dass durch ein Messfenster Messstrahlen, welche von einem Sensor in Richtung des Messfensters emittiert werden, durch das Messfenster nicht oder nur geringfügig absorbiert werden, gleiches gilt für einkommende, im Medium reflektierte oder erzeugte Strahlung. Daher weist das Messfenster bevorzugt eine Transparenz in einem Wellenlängenbereich auf, der dem Messbereich des Sensors entspricht. Weiter ist vorteilhaft, dass bei Anordnung eines Sensors in der Sensoraufnahme die Sensorkomponenten durch ein Abschließen vor Feuchtigkeit, mechanische Beschädigungen und Staub geschützt werden.

In einer bevorzugten Ausführungsform ist das optische Element der Sensoraufnahme bei Anordnung des Messstutzens an die Haltebaugruppe an dem Anschlag des Messstutzens anliegend ausgebildet, insbesondere, dass bei Anordnung des Messstutzens an die Haltebaugruppe das optische Element der Sensoraufnahme zumindest teilweise bevorzugt vollständig mit dem Anschlag des Messstutzens überlappt.

Vorteilhaft ist bei dieser Ausführungsform, dass durch das Anlegen der Sensoraufnahme an den Anschlag des Messstutzens die Messstrahlen, welche von einem Sensor in Richtung des Anschlages emittiert werden, durch die Ausrichtung der Elemente nicht oder nur geringfügig absorbiert oder reflektiert werden, gleiches gilt für einkommende, im Medium reflektierte oder erzeugte Strahlung.

In einer bevorzugten Ausführungsform weist der Anschlag des Messstutzens ein Messfenster auf. Insbesondere ist der Anschlag des Messstutzens bevorzugt als ein Messfenster ausgebildet.

Vorteilhaft ist bei dieser Ausführungsform, dass somit Messstrahlung, welche von dem Sensor über die Lichtwellenleiter in Richtung des Messfensters emittiert wird, unmittelbar durch das Messfenster transmittieren kann. Gleiches gilt für einkommende oder reflektierte Strahlung. Weiter wird somit eine Trennung zwischen dem Medium innerhalb des Prozessbehälters und der Sensoraufnahme erzielt, dies beugt eine Kontaminierung vor.

In einer bevorzugten Ausführungsform umschließt das Befestigungselement die Sensoraufnahme zumindest bei Anordnung des Messstutzens an die Haltebaugruppe.

Vorteilhaft ist bei dieser Ausführungsform, dass die beim Anordnen des Befestigungselements an den Messstutzen auftretenden Kräfte gleichmäßig über das Federelement, welches auch von dem Befestigungselement umfasst wird, in die Sensoraufnahme eingetragen werden. Die gleichmäßige Eintragung der Kräfte wirkt einem Verkippen oder einem Neigen der Sensoraufnahme aus der Ausgleichsachse entgegen.

In einer bevorzugten Ausführungsform sind der Messstutzen und die Haltebaugruppe bei Anordnung des Messstutzens an die Haltebaugruppe konzentrisch angeordnet, insbesondere sind das Befestigungselement, die Sensoraufnahme und der Messstutzen konzentrisch angeordnet.

Vorteilhaft ist bei dieser Ausführungsform, dass somit ein einfaches Anordnen der einzelnen Elemente möglich ist. Ein weiterer Vorteil für die konzentrische Anordnung der Elemente ist der geringe Platzaufwand.

In einer bevorzugten Ausführungsform sind die Elemente der Haltebaugruppe untrennbar ausgebildet, sodass die Baugruppe als solche an den Messstutzen anordenbar und von diesem lösbar ist.

Vorteilhaft ist bei dieser Ausführungsform, dass die Haltebaugruppe in einer einfachen Art und Weise an dem Messstutzen positioniert werden kann.

In einer bevorzugten Ausführungsform sind daher die Elemente der Haltebaugruppe zueinander unlösbar angeordnet.

In einer bevorzugten Ausführungsform ist die Sensoraufnahme zylinderförmig, insbesondere als Kreiszylinder ausgebildet.

Vorteilhaft ist bei dieser Ausführungsform, dass somit in einer einfachen Art und Weise die Sensorik eines sich in dem Hohlraum befindlichen Sensors in den Messstutzen eingeführt werden kann.

In einer bevorzugten Ausführungsform ist das Federelement als Feder, insbesondere eine Druckfeder oder als eine Zugfeder, bevorzugt als Druckfeder ausgebildet.

Vorteilhaft ist bei einer Ausführungsform mit einer Feder, dass die Feder mit einer linearen Federcharakteristik ausgebildet werden kann. Zudem ist bei Ausbildung der Feder als Druckfeder vorteilhaft, dass die Druckfeder in einfacher weise zwischen dem Befestigungselement und der Sensoraufnahme positioniert werden kann, um die gewünschte Wirkung zu erzielen.

Die erfindungsgemäße Sensoreinheit weist einen Sensor und eine Sensorpositioniervorrichtung auf.

Die erfindungsgemäße Sensoreinheit ist zur bevorzugt optischen Messung im Medium, insbesondere bevorzugt zur Trübungsmessung ausgebildet. Ebenso liegt es im Rahmen der Erfindung, die Sensoreinheit für andere Messmethoden auszubilden.

Die Sensoreinheit weist eine Sensorpositioniervorrichtung auf, wobei es wesentlich ist, dass die Sensorpositioniervorrichtung als erfindungsgemäße Sensorpositioniervorrichtung, insbesondere gemäß einer bevorzugten Ausführungsform der erfindungsgemäßen Sensorpositioniervorrichtung ausgebildet ist. Weiter ist wesentlich, dass der Sensor in dem Hohlraum der Sensoraufnahme der Sensorpositioniervorrichtung angeordnet ist.

Vorteilhaft ist hierbei, dass der Sensor durch die Sensoraufnahme der Sensorpositioniervorrichtung geführt wird, somit kann eine präzise Positionierung des Sensors erfolgen. Zudem zeichnet sich die Sensoreinheit besonders durch eine einfache und praxisgerechte Handhabung aus.

In einer bevorzugten Ausführungsform ist der Sensor dazu geeignet, optische & spektroskopische Messverfahren durchzuführen, insbesondere in einem der Bereiche UV-,VIS-, NIR- oder MIR-Spektralbereich, aber nicht auf diesen Spektralbereich beschränkt.

In einer bevorzugten Ausführungsform ist der Sensor mit zumindest zwei Lichtwellenleiter ausgebildet, welche in der Sensoraufnahme der Sensorpositioniervorrichtung angeordnet sind. Die zumindest zwei Lichtwellenleiter weisen jeweils ein freies Ende auf, welches innerhalb der Sensoraufnahme der Sensorpositioniervorrichtung mit einer Halteeinrichtung in einer dem Anschlag des Messstutzens der Sensorpositioniervorrichtung zugewandten Position gehalten werden.

Vorteilhaft ist bei dieser Ausführungsform, dass in einer der zumindest zwei Lichtwellenleiter emittiertes Licht und in einem zweiten der zumindest zwei Lichtwellenleiter ein detektiertes Licht geführt werden kann. Vorteilhaft ist zudem das durch die freien Enden der Lichtwellenleiter, Licht in einer einfachen Art und Weise in die Lichtwellenleiter eingeleitet werden können. Vorteilhaft ist bei der Haltevorrichtung, dass diese die Lichtwellenleiter aufwandsarm und präzise positioniert, zudem schützt die Haltevorrichtung die Lichtwellenleiter vor auftretende Biege- und Zugkräfte. Vorteilhaft beim Halten der Lichtwellenleiter in eine dem Anschlag des Messstutzens zugewandte Position ist es, dass somit aus Richtung des Anschlages kommende Lichtsignale gezielt erfasst werden können.

In einer bevorzugten Ausführungsform liegen bei Anordnen des Messstutzens der Sensorpositioniervorrichtung an die Haltebaugruppe der Sensorpositioniervorrichtung die freien Enden der Lichtwellenleiter unmittelbar an dem Anschlag an.

Vorteilhaft ist bei dieser Ausführungsform, dass somit, insbesondere wenn der Anschlag als Messfenster ausgeführt ist, Messstrahlung, welche von dem Sensor über die Lichtwellenleiter in Richtung des Messfensters emittiert wird, unmittelbar durch das Messfenster transmittiert, ohne wegbedingte Ungenauigkeiten zu unterliegen. Gleiches gilt für einkommende oder reflektierte Strahlung.

In einer bevorzugten Ausführungsform sind die zumindest zwei Lichtwellenleiter derart angeordnet, dass in Verlängerung der freien Enden der Lichtwellenleiter entlang einer Verlängerungsachse ein gemeinsamer optischer Schnittpunkt entsteht, insbesondere das ein gemeinsamer Schnittpunkt bei Anordnung des Messstutzens an die Haltebaugruppe, auf der sich der freien Enden der Lichtwellenleiter abgewandten Seite des Anschlages des Messstutzens der Sensorpositioniervorrichtung entsteht.

Vorteilhaft ist bei dieser Ausführungsform, dass bei dieser Anordnung der Lichtwellenleiter insbesondere bei einer Sensoreinheit zur Trübungsmessung, wobei ein Lichtwellenleiter emittiertes Licht führt und ein weiterer Lichtwellenleiter reflektiertes Licht empfängt, ein von der Messstrahlung beleuchtetes Messfeld erzielt wird.

In einer bevorzugten Ausführungsform sind die zumindest zwei Lichtwellenleiter jeweils durch optische Fasern oder durch Faserbündel ausgebildet.

Vorteilhaft ist bei der Ausführungsform mit optischen Fasern, dass die optischen Fasern in einer einfachen Art und Weise an optoelektronische Elemente gekoppelt werden können. Vorteilhaft ist bei der Ausführungsform mit Faserbündeln, dass durch Faserbündel eine höhere Lichtleistung und höhere optische Intensitäten übertragen werden können.

In einer bevorzugten Ausführungsform ist zumindest einer der zumindest zwei Lichtwellenleiter des Sensors durch ein Faserbündel, ausgebildet.

In einer weiteren bevorzugten Ausführungsform sind die Lichtwellenleiter des Sensors zumindest abschnittsweise als Bündel zusammengeführt. Insbesondere ist es vorteilhaft, die Lichtwellenleiter des Sensors jeweils als Faser oder Faserbündel auszubilden und zumindest abschnittsweise alle Lichtwellenleiter des Sensors zu einem Faserbündel zu vereinen.

Vorteilhaft ist bei dieser Ausführungsform, dass durch das abschnittsweise zusammenführen der Lichtwellenleiter zu Bündel eine platzsparende Führung möglich ist.

Die erfindungsgemäße Sensorpositioniervorrichtung und/oder die erfindungsgemäße Sensoreinheit sind grundsätzlich für Anwendungen geeignet in der Prozessüberwachung, insbesondere Bioprozessüberwachung.

Als Lichtwellenleiter werden vorzugsweise gängige Lichtwellenleiter wie Singlemode-Lichtwellenleiter, Multimode-Lichtwellenleiter, Polarisationserhaltende-Lichtwellenleiter oder optische Kunststoff-Fasern verwendet.

In einer weiteren vorteilhaften Ausführungsform ist das Material des Messfensters der Sensoraufnahme sowie des als Messfenster ausgebildeten Anschlags des Messstutzens aus transparentem Material, bevorzugt zumindest für den verwendeten optischen oder spektroskopischen Messbereich transparentem Material ausgebildet. Das Messfenster ist bevorzugt aus Glas, insbesondere aus Glaskeramik, besonders bevorzugt aus Saphirglas ausgebildet.

In einer weiteren vorteilhaften Ausführungsform ist der Messstutzen der Sensorpositioniervorrichtung aus einem biokompatibelen Material gefertigt, insbesondere aus Polyethylen (PE), bevorzugt aus Polyaryletherketon (PAEK), bevorzugt aus Polyethylenterephthalat (PET) oder aus Polypropylen (PP) oder aus Polyamid (PA) ausgebildet, insbesondere aus Polyetheretherketon (PEEK), bevorzugt aus Polyphenylensulfon (PPSU).

Bei einer bevorzugten Ausführungsform weist der Messstutzen ein zusätzliches Festlegeelement auf, wobei dieses zur Festlegung des Messstutzens an ein Anschlussstutzen eines Prozessbehälters, insbesondere eines Einwegprozessbehälters, ausgebildet ist.

Vorteilhaft ist bei dieser Ausführungsform, dass somit ein bestehender Prozessbehälter, insbesondere ein Einwegprozessbehälter in einer einfachen Art und Weise mit einem Messstutzen versehen werden kann, um die Haltebaugruppe daran zu befestigen.

Typische Anschlussstutzen von Prozessbehältern, insbesondere von Bioreaktoren, weisen eine Öffnung auf.

Bei einer bevorzugten Ausführungsform ist der Messstutzen der Sensorpositioniervorrichtung ausgebildet, um eine fluiddichte Anordnung an den Prozessbehälter zu ermöglichen. Insbesondere sind bevorzugt der Messstutzen der Sensorpositioniervorrichtung und ein Anschlussstutzen des Prozessbehälters zusammenwirkend ausgebildet, so dass der Anschlussstutzen des Prozessbehälters durch den Messstutzen der Sensorpositioniervorrichtung fluiddicht verschlossen wird.

Weitere bevorzugte Merkmale und Ausführungsformen der erfindungsgemäßen Sensorpositioniervorrichtung und der erfindungsgemäßen Sensoreinheit werden im Folgenden anhand von Ausführungsbeispielen und den Figuren erläutert. Die Ausführungsbeispiele sind lediglich vorteilhafte Ausgestaltungen der Erfindung und nicht einschränkend. Es zeigt:
- Figur 1:: Zwei Teilabbildungen mit schematischen Darstellungen von Ausführungsbeispielen einer Sensoreinheit mit einer Sensorpositioniervorrichtung im nicht an einen Messstutzen angeordneten Zustand Fig. 1a und im an den Messstutzen angeordneten Zustand 1b und
- Figur 2:: vier Teilabbildungen mit schematischen Darstellungen von Ausführungsbeispielen einer Haltebaugruppe einer Sensoreinheit.

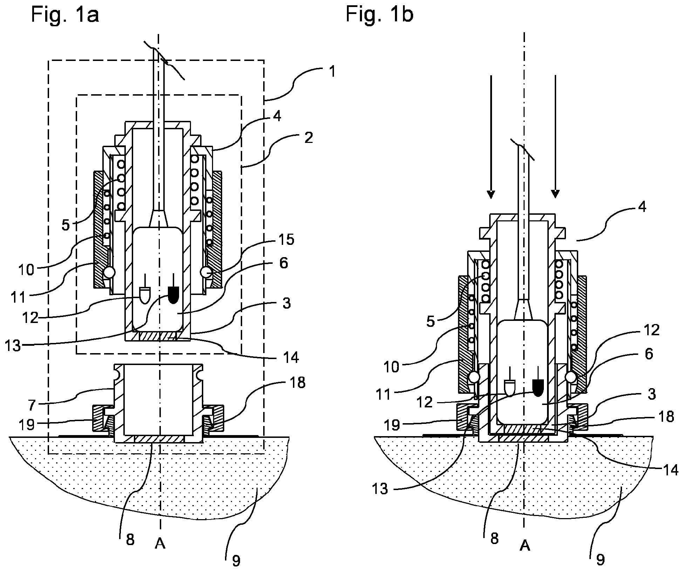

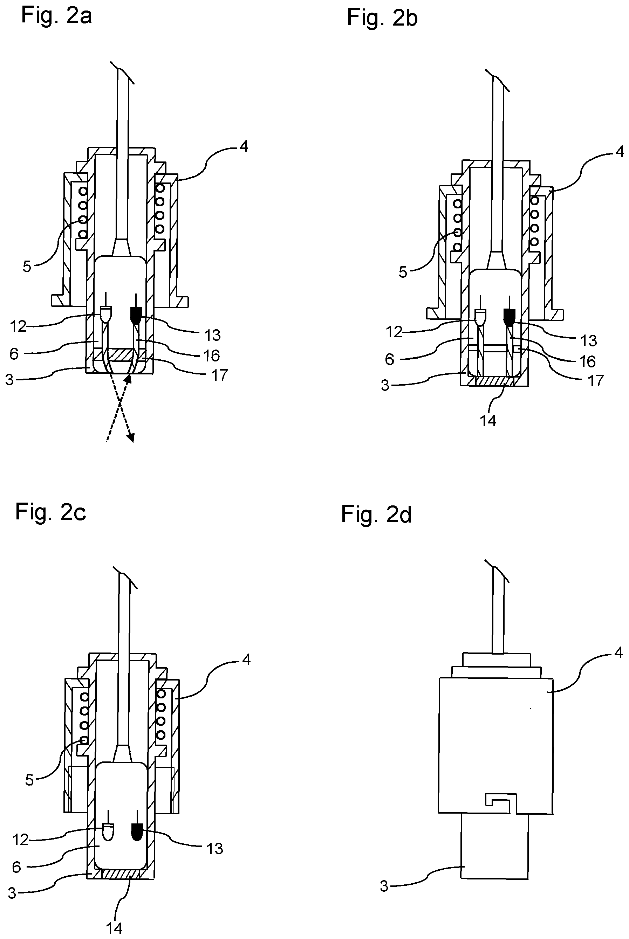

In den Figuren 1 und 2 bezeichnen gleiche Bezugszeichen gleiche oder gleichwirkende Elemente.

Fig. 1a zeigt eine Teilabbildung einer schematischen Darstellung einer Sensoreinheit mit einer Sensorpositioniervorrichtung 1 im nicht angeordneten Zustand. Die Sensorpositioniervorrichtung 1 weist in diesem Ausführungsbeispiel eine Haltebaugruppe 2 auf, welche in diesem Ausführungsbeispiel mit einer Schnellkupplung ausgebildet ist. Weiter weist die Sensorpositioniervorrichtung 1 eine Sensoraufnahme 3 auf.

Diese Sensoraufnahme 3 bildet einen Hohlraum aus, in welchem sich ein Sensor 6 befindet. Der Hohlraum ist einseitig von einem Messfenster 14 abgeschlossen. Dieses Messfenster 14 ist in einem elektromagnetischen Wellenbereich durchgängig, in diesem Ausführungsbeispiel für elektromagnetische Wellen im UV-Bereich. Der sich im Hohlraum befindliche Sensor 6 ist als optischer Sensor 6 ausgeführt. Um Messsignale auszusenden, weist der Sensor 6 eine LED 12 auf, welche elektromagnetische Wellen im UV-Bereich aussendet, zudem weist der Sensor 6 einen Detektor auf, dieser Detektor ist in diesem Ausführungsbeispiel im UV-Bereich sensitiv, um UV-Licht zu detektieren.

Die Sensoraufnahme 3 und das Befestigungselement sind konzentrisch zu einer Ausgleichsachse A angeordnet, dabei umschließt die Haltebaugruppe 2 die Sensoraufnahme 3. Die Sensoraufnahme 3 weist in diesem Ausführungsbeispiel zwei ringförmige Ausformungen auf, diese Ausformungen erstrecken sich radial und bilden somit zwei voneinander beabstandete Vorsprünge. Das Befestigungselement setzt sich bei diesem Ausführungsbeispiel aus einer Verriegelungsvorrichtung, welche eine Entriegelungsmuffe 11, eine Verriegelungsfederelement 10 und ein Verriegelungselement 15 umfasst und einer Verbindungsschulter 4 zusammen. Die Verbindungsschulter 4 weist einen kreiszylindrischen Grundkörper auf, welcher einseitig über einen Schulterring abgeschlossen ist.

Der Schulterring der Verbindungsschulter ist zwischen den Vorsprüngen der Sensoraufnahme 3 positioniert, sodass der zylindrische Grundkörper die Sensoraufnahme 3 in Richtung der Ausgleichsachse überlappt. Zwischen dem Schulterring der Verbindungsschulter 4 und der ringförmigen Ausformung der Sensoraufnahme 3, welche der mit dem Messfenster 14 abgeschlossenen Seite am nächsten liegt, ist das Federelement 5 angeordnet. Das Federelement 5 ist in diesem Ausführungsbeispiel eine Druckfeder. Der zylindrische Grundkörper der Verbindungsschulter 4 überlappt die Druckfeder in Richtung der Ausgleichsachse.

Das Federelement 5 ist in diesem noch nicht an dem Messstutzen Angeordnetem zustand, unkomprimiert und somit unbelastet. Die Sensoraufnahme 3 ist gegenüber dem Befestigungselement entlang der Ausgleichsachse A verschiebbar gelagert. Wird die Sensoraufnahme 3 relativ zu dem Befestigungselement in Richtung des Schulterrings verschoben, so wird die Druckfeder gestaucht und es wird eine Federkraft aufgebaut, diese Rückstellkraft wirkt entgegen der Kraft, welche durch das Verschieben aufgebracht wird.

Der Messstutzen 7 weist einen kreiszylindrischen Grundkörper auf, der einseitig mit einem Anschlag 8 abgeschlossen ist. In diesem Ausführungsbeispiel ist der Anschlag 8 durch ein Messfenster ausgebildet.

Der Messstutzen ist an einem Prozessbehälter 9 angeordnet. Hierzu weist der Prozessbehälter 9 einen Anschlussstutzen 18 mit einer Öffnung auf. Durch den Messstutzen 7 wird der Anschlussstutzen 18 fluiddicht verschlossen.

Der Prozessbehälter 9 ist mit einem Medium, dessen Zustand erfasst werden soll, gefüllt. Zur Festlegung des Messstutzens an den Anschlussstutzen des Prozessbehälters 9 weist der Messstutzen einen Stutzenanschlag auf, dieser Stutzenanschlag ist mittels einem Sicherungselement 19 an dem Anschlussstutzen des Prozessbehälters 9 Angelegt und in seiner Position gesichert.

Der zylindrische Grundkörper des Messstutzens weist einen Kupplungsstecker auf. Dieser Kupplungsstecker weist eine ringförmige, radialverlaufende halbkreisförmige, Nut auf. Diese Nut ermöglicht es im angeordneten Zustand eine formschlüssige Verbindung mit dem Verriegelungselement 15 der Verriegelungsvorrichtung des Befestigungselements einzugehen, um somit eine formschlüssige Verbindung mit dem als Muffe ausgeführten Befestigungselement einzugehen.

In den Hohlraum des Messstutzens 7 soll der Sensor 6 der Sensoreinheit positioniert werden, hierfür wird die Haltebaugruppe 2 koaxial zur Zylinderachse des Messstutzens 7 angeordnet und die Haltebaugruppe 2 in Richtung des Messstutzens 7 verschoben, sodass die Sensoraufnahme 3 in den Hohlraum des Messstutzens 7 entlang der Ausgleichsachse in Richtung des Messfensters verschoben wird.

Beim Erreichen der Anlegeposition der Sensoraufnahme 3 ist das Messfenster 14 der Sensoraufnahme 3 der Haltebaugruppe 2 an dem Messfenster 8 des Messstutzens angelegt. Das Befestigungselement ist beim Erreichen der Anlegeposition der Sensoraufnahme 3 jedoch noch nicht am Messstutzen 7 festgelegt. Das Befestigungselement wird weiter entlang der Ausgleichsrichtung weiter verschoben. Bei dieser Verschiebung wird die Sensoraufnahme 3 bis zum Erreichen der Festlegeposition gegen das Federelement 5 gedrückt. Beim Erreichen der Festlegeposition ist der Kupplungsstecker des Messstutzens 7 in die Muffe des Befestigungselements eingesteckt und über das Verriegelungselement 15 in diesem Ausführungsbeispiel eine Kugel formschlüssig verbunden.

Die Verriegelungsvorrichtung verhindert ein ungewolltes Lösen des Befestigungselements von dem Messstutzen. Die aufgebaute Rückstellkraft des Federelements 5 bleibt durch die Festlegung erhalten, dies führt dazu, dass die Sensoraufnahme 3, insbesondere das Messfenster 14 der Sensoraufnahme 3 an das Messfenster 8 des Messstutzens 7 gepresst wird. In diesem Zustand umschließt das Befestigungselement die Sensoraufnahme 3 und einen Teil des Messstutzens 7.

Zum Lösen der Sensoreinheit wird die Entriegelungsmuffe 11 entgegen der Anpressrichtung der Sensoraufnahme 3 verschoben. Durch das verschieben wird das Verriegelungsfederelement 10 gestaucht und das Verriegelungselement 15 wird freigegeben, sodass die formschlüssige Verbindung zwischen dem Befestigungselement und dem Messstutzen 7 aufgehoben wird.

In Teilfigur 2a ist ein Ausführungsbeispiel einer Sensoreinheit gezeigt, welche sich dahingehend von der Sensoreinheit des ersten Ausführungsbeispiels unterscheidet, dass die Haltebaugruppe 2 über eine weitere Art der Ausgestaltung des Befestigungselements an einem Messstutzen 7 festgelegt wird, hierbei weist die das Befestigungselement eine ringförmige Ausformung auf, welche formschlüssig in eine Nut des Messstutzens 7 angeordnet wird. Zur Verriegelung wird ein Verriegelungselement 15 des Messstutzens 7 verwendet. Der zugehörige Messstutzen 7 ist in dieser Abbildung nicht gezeigt.

Weiter unterscheidet sich das Ausführungsbeispiel 2a zu dem ersten Ausführungsbeispiel dahingehend, dass die Sensoraufnahme 3 nicht durch ein Messfenster abgeschlossen ist. Bei diesem Ausführungsbeispiel sind an der emittierenden Diode 12 und detektierenden Diode 13 jeweils ein Lichtwellenleiter 16 angebunden. Die Lichtwellenleiter 16 sind in diesem Ausführungsbeispiel als optische Faserbündel ausgeführt. Diese Faserbündel 16 sind voneinander beabstandet angeordnet und weisen ein offenes Ende auf. Diese Faserbündel 16 sind jeweils entlang der Ausgleichsachse orientiert.

Die Faserbündel 16 werden von einer Halteeinrichtung 17 in einer dem Messfenster 8 des Messstutzens 7 zugewandten Position gehalten. Die Faserbündel 16 sind in diesem Ausführungsbeispiel derart angeordnet, dass in Verlängerung der freien Enden ein gemeinsamer Schnittpunkt entsteht. Der Schnittpunkt der Verlängerungen liegt bei diesem Ausführungsbeispiel im angeordneten Zustand der Haltebaugruppe 2 an dem Messstutzen 7 auf der sich der freien Enden der Faserbündel abgewandten Seite des Messfensters des Messstutzens 7.

Wird die Sensoraufnahme 3 relativ zu dem Befestigungselement verschoben, so wird das Federelement 5 gestaucht und es wird eine Federkraft aufgebaut, diese Rückstellkraft wirkt entgegen der Kraft, welche durch das Verschieben aufgebracht wird.

In Teilfigur 2b ist ein Ausführungsbeispiel einer Sensoreinheit gezeigt, welches sich zur Sensoreinheit des Ausführungsbeispiels der Teilfigur 2a dahingehend unterscheidet, dass die Sensoraufnahme 3 wie auch im ersten Ausführungsbeispiel durch ein Messfenster 14 abgeschlossen ist. Hierbei werden die offenen Enden der Lichtwellenleiter 16 direkt an das Messfenster 14 angeordnet. Bei diesem Ausführungsbeispiel sind die Lichtwellenleiter jeweils als optische Faser ausgebildet.

In Teilfigur 2c ist ein Ausführungsbeispiel einer Sensoreinheit gezeigt, welche sich zur Sensoreinheit des Ausführungsbeispiels der Teilfigur 2b dahingehend unterscheidet, dass das Befestigungselement ein Innengewinde zur Festlegung an einen Messstutzen mit einem außen Gewinde aufweist.

In Teilfigur 2d ist ein Ausführungsbeispiel einer Sensoreinheit gezeigt, welche sich zur Sensoreinheit des Ausführungsbeispiels der Teilfigur 2c dahingehend unterscheidet, dass das Befestigungselement ein Längsschlitz aufweist, an dessen Ende rechtwinklig zu diesem Längsschlitz ein kurzer Querschlitz ansetzt, welcher am Ende eine Rastposition aufweist. Über diese Ausgestaltung kann eine schnell herstellbare und lösbare mechanische Verbindung zwischen dem Befestigungselement und einem Messstutzen 7, welcher eine knopfförmige Ausformung an dem zylindrischen Grundkörper aufweist, erfolgen. Hierbei wird die knopfförmige Ausformung über den Längsschlitz eingeführt und durch eine Drehbewegung in den Querschlitz eingeführt, bis die knopfförmige Ausformung in die Rastposition gelangt. Durch dieses Ausführungsbeispiel kann in einer einfachen Art und Weise eine Bajonettverbindung zwischen Haltebaugruppe 2 und Messstutzen 7 ausgebildet werden.

### Bezugszeichenliste

- 1: Sensorpositioniervorrichtung
- 2: Haltebaugruppe
- 3: Sensoraufnahme
- 4: Verbindungsschulter
- 5: Federelement
- 6: Sensor
- 7: Messstutzen
- 8: Anschlag/Messfenster des Messstutzen
- 9: Prozessbehälter
- 10: Verriegelungsfederelement
- 11: Entriegelungsmuffe
- 12: Sender
- 13: Detektor
- 14: Messfenster der Sensoraufnahme
- 15: Verriegelungselement
- 16: Lichtwellenleiter
- 17: Halteeinrichtung
- 18: Anschlussstutzen
- 19: Sicherungselement

## Patentansprüche

1. Sensorpositioniervorrichtung (1), mit
einer Haltebaugruppe (2), welche eine Sensoraufnahme (3), ein Befestigungselement und ein Federelement (5) aufweist,
wobei die Sensoraufnahme (3) einen Hohlraum zur Aufnahme eines Sensors (6), insbesondere eines optischen Sensors (6) aufweist,
wobei
die Sensoraufnahme (3) gegenüber dem Befestigungselement entlang einer Ausgleichsachse verschiebbar gelagert ist und
wobei
das Federelement (5) zwischen Befestigungselement und Sensoraufnahme (3) und mit diesen zusammenwirkend angeordnet ist, um eine Rückstellkraft bei Verschieben der Sensoraufnahme (3) relativ zu dem Befestigungselement entlang der Ausgleichsachse auszubilden,
wobei
dass die Sensorpositioniervorrichtung (1) einen Messstutzen (7) mit einem Anschlag (8) aufweist, wobei der Messstutzen (7) zur Anordnung an einen Prozessbehälter (9) ausgebildet ist,
wobei
der Messstutzen (7) zur lösbaren Anordnung an der Haltebaugruppe (2) ausgebildet ist,
wobei
die Sensorpositioniervorrichtung (1) derart ausgebildet ist, dass bei Anordnung des Messstutzens (7) an der Haltebaugruppe (2) die Sensoraufnahme (3) relativ zu dem Befestigungselement entlang der Ausgleichsachse bewegbar ist,
**dadurch gekennzeichnet, dass** mittels des Federelementes (5) eine Anpresskraft der Sensoraufnahme (3) an den Anschlag (8) des Messstutzens (7) ausgebildet wird.

2. Sensorpositioniervorrichtung (1) nach Anspruch 1,
**dadurch gekennzeichnet,**
**dass** das Befestigungselement eine Kupplungsmuffe und der Messstutzen (7) einen Kupplungsstecker oder das Befestigungselement einen Kupplungsstecker und der Messstutzen (7) eine Kupplungsmuffe ausbildet,
wobei der Kupplungsstecker in die Kupplungsmuffe einführbar ausgebildet ist,
**dass** die Sensorpositioniervorrichtung eine Verriegelungsvorrichtung aufweist, wobei die Verriegelungsvorrichtung ausgebildet ist, um in einer Verriegelungsposition den Kupplungsstecker formschlüssig mit der Kupplungsmuffe zu verriegeln und
**dass** die Verriegelungsvorrichtung ausgebildet ist, um in einer Entriegelungsposition den
Kupplungsstecker und die Kupplungsmuffe zu entriegeln.

3. Sensorpositioniervorrichtung (1) nach Anspruch 1 oder Anspruch 2, **dadurch gekennzeichnet,**
**dass** der Hohlraum der Sensoraufnahme (3) einseitig mit einem optischen Element, insbesondere einem Messfenster (14) der Sensoraufnahme (3) abgeschlossen ist.

4. Sensorpositioniervorrichtung (1) nach Anspruch 3,
**dadurch gekennzeichnet,**
**dass** das optische Element der Sensoraufnahme (3) bei Anordnung des Messstutzens (7) an die Haltebaugruppe (2) an dem Anschlag (8) des Messstutzens (7) anliegend ausgebildet ist, insbesondere, dass bei Anordnung des Messstutzens (7) an die Haltebaugruppe (2) das optische Element der Sensoraufnahme (3) zumindest teilweise, bevorzugt vollständig mit dem Anschlag (8) des Messstutzens (7) überlappt.

5. Sensorpositioniervorrichtung (1) nach einem der vorangegangenen Ansprüche,
**dadurch gekennzeichnet,**
**dass** der Anschlag des Messstutzens ein Messfenster aufweist, insbesondere als Messfenster ausgebildet ist.

6. Sensorpositioniervorrichtung (1) nach einem der vorangegangenen Ansprüche,
**dadurch gekennzeichnet,**
**dass** das Befestigungselement die Sensoraufnahme (3) zumindest bei Anordnung des Messstutzens (7) an die Haltebaugruppe (2) umschließt.

7. Sensorpositioniervorrichtung (1) nach einem der vorangegangenen Ansprüche,
**dadurch gekennzeichnet,**
**dass** der Messstutzen (7) und die Haltebaugruppe (2) bei Anordnung des Messstutzens (7) an die Haltebaugruppe (2) konzentrisch angeordnet sind, insbesondere, dass das Befestigungselement, die Sensoraufnahme (3) und der Messstutzen (7) konzentrisch angeordnet sind.

8. Sensorpositioniervorrichtung (1) nach einem der vorangegangenen Ansprüche,
**dadurch gekennzeichnet,**
**dass** die Elemente der Haltebaugruppe (2) untrennbar ausgebildet sind, so dass die Baugruppe als solche an den Messstutzen (7) anordenbar und von diesem lösbar ist.

9. Sensorpositioniervorrichtung (1) nach einem der vorangegangenen Ansprüche,
**dadurch gekennzeichnet,**
**dass** die Sensoraufnahme (3) zylinderförmig, insbesondere als Kreiszylinder ausgebildet ist,

10. Sensorpositioniervorrichtung (1) nach einem der vorangegangenen Ansprüche,
**dadurch gekennzeichnet,**
**dass** der Messstutzen (7) lösbar über eine Schnellkuppelverbindung, eine Rastverbindung, eine Bajonettverbindung oder eine Schraubverbindung zur Anordnung an der Haltebaugruppe (2) ausgebildet ist.

11. Sensorpositioniervorrichtung (1) nach einem der vorangegangenen Ansprüche,
**dadurch gekennzeichnet,**
**dass** die Haltebaugruppe (2) zur Anordnung des Messstutzens (7) über eine Schnellkuppelverbindung, eine Rastverbindung, eine Bajonettverbindung oder eine Schraubverbindung ausgebildet ist.

12. Sensorpositioniervorrichtung nach einem der vorangegangenen Ansprüche
**dadurch gekennzeichnet,**
**dass** das Federelement (5) als eine Druckfeder oder als eine Zugfeder ausgebildet ist.

13. Sensoreinheit, insbesondere zur Trübungsmessung, mit einer Sensorpositioniervorrichtung (1), und einem Sensor (6)
**dadurch gekennzeichnet,**
**dass** die Sensorpositioniervorrichtung (1) gemäß einem der Ansprüche 1 bis 12 ausgebildet ist und
**dass** der Sensor (6) in dem Hohlraum der Sensoraufnahme (3) der Sensorpositioniervorrichtung (1) angeordnet ist.

14. Sensoreinheit nach Anspruch 13,
**dadurch gekennzeichnet,**
**dass** der Sensor (6) mit zumindest zwei Lichtwellenleiter (16) ausgebildet ist, welche in der Sensoraufnahme (3) der Sensorpositioniervorrichtung angeordnet sind
und **dass** die zumindest zwei Lichtwellenleiter (16) jeweils ein freies Ende aufweisen, welches innerhalb der Sensoraufnahme (3) der Sensorpositioniervorrichtung mit einer Halteeinrichtung (17) in einer dem Anschlag (8) des Messstutzens (7) der Sensorpositioniervorrichtung (1) zugewandten Position gehalten werden.

15. Sensoreinheit nach Anspruch 14,
**dadurch gekennzeichnet,**
**dass** bei Anordnung des Messstutzens (7) der Sensorpositioniervorrichtung (1) an die Haltebaugruppe (2) der Sensorpositioniervorrichtung (1) die freien Enden der Lichtwellenleiter (16) unmittelbar an dem Anschlag (8) anliegt.

16. Sensoreinheit nach einem der Ansprüche 13 bis 15,
**dadurch gekennzeichnet,**
**dass** die zumindest zwei Lichtwellenleiter (16) derart angeordnet sind,
**dass** in Verlängerung der freien Enden der Lichtwellenleiter (16) entlang einer Verlängerungsachse ein gemeinsamer optischer Schnittpunkt entsteht, insbesondere das ein gemeinsamer Schnittpunkt bei Anordnung des Messstutzens (7) an die Haltebaugruppe (2), auf der sich der freien Enden der Lichtwellenleiter (16) abgewandten Seite des Anschlages (8) des Messstutzens (7) der Sensorpositioniervorrichtung (1) entsteht.

## Claims

1. Sensor positioning device (1) comprising
a holding assembly (2), which has a sensor mount (3), a fastening element and a spring element (5),
wherein the sensor mount (3) has a cavity for receiving a sensor (6), in particular an optical sensor (6),
wherein
the sensor mount (3) is mounted to be displaceable relative to the fastening element along a compensation axis and
wherein
the spring element (5) is arranged between the fastening element and sensor mount (3) and interacts with the latter, in order to form a restoring force when the sensor mount (3) is displaced relative to the fastening element along the compensation axis,
wherein the sensor positioning device (1) has a measuring nozzle (7) with a stop (8), wherein the measuring nozzle (7) is configured for arrangement on a process container (9),
wherein the measuring nozzle (7) is configured for releasable arrangement on the holding assembly (2),
wherein the sensor positioning device (1) is configured such that when the measuring nozzle (7) is arranged on the holding assembly (2), the sensor mount (3) can be moved relative to the fastening element along the compensation axis,
**characterized in that** a pressing force of the sensor mount (3) on the stop (8) of the measuring nozzle (7) is created by means of the spring element (5).

2. Sensor positioning device (1) according to claim 1,
**characterized in that**
the fastening element forms a coupling sleeve and the measuring nozzle (7) forms a coupling plug or the fastening element forms a coupling plug and the measuring nozzle (7) forms a coupling sleeve,
wherein the coupling plug is configured to be insertable into the coupling sleeve,
**in that** the sensor positioning device has a locking device, wherein the locking device is configured to lock the coupling plug in a form-fitting manner to the coupling sleeve in a locking position, and
the locking device is configured to unlock
the coupling plug and the coupling sleeve in an unlocking position.

3. Sensor positioning device (1) according to claim 1 or claim 2,
**characterized in that**
the cavity of the sensor mount (3) is closed on one side by an optical element, in particular a measuring window (14) of the sensor mount (3).

4. Sensor positioning device (1) according to claim 3,
**characterized in that**
the optical element of the sensor mount (3) is configured to bear on the stop (8) of the measuring nozzle (7) when the measuring nozzle (7) is arranged on the holding assembly (2), in particular **in that** with the arrangement of the measuring nozzle (7) on the holding assembly (2) the optical element of the sensor mount (3) overlaps at least partially, preferably fully the stop (8) of the measuring nozzle (7).

5. Sensor positioning device (1) according to any one of the preceding claims, **characterized in that**
the stop of the measuring nozzle comprises a measuring window, in particular is configured as a measuring window.

6. Sensor positioning device (1) according to any one of the preceding claims, **characterized in that**
the fastening element encloses the sensor mount (3) at least when the measuring nozzle (7) is arranged on the holding assembly (2).

7. Sensor positioning device (1) according to any one of the preceding claims, **characterized in that**
the measuring nozzle (7) and the holding assembly (2) are arranged to be concentric when the measuring nozzle (7) is arranged on the holding assembly (2), in particular **in that** the fastening element, the sensor mount (3) and the measuring nozzle (7) are arranged concentrically.

8. Sensor positioning device (1) according to any one of the preceding claims, **characterized in that**
the elements of the holding assembly (2) are configured to be inseparable, so that the assembly as such can be arranged on the measuring nozzle (7) and can be detached therefrom.

9. Sensor positioning device (1) according to any one of the preceding claims, **characterized in that**
the sensor mount (3) is cylindrical, in particular in the form of a circular cylinder,

10. Sensor positioning device (1) according to any one of the preceding claims, **characterized in that**
the measuring nozzle (7) is configured to be detachable via a quick-coupling connection, a latching connection, a bayonet connection or a screw connection for arrangement on the holding assembly (2).

11. Sensor positioning device (1) according to any one of the preceding claims, **characterized in that**
the holding assembly (2) is configured for arranging the measuring nozzle (7) via a quick-coupling connection, a latching connection, a bayonet connection or a screw connection.

12. Sensor positioning device according to any one of the preceding claims, **characterized in that**
the spring element (5) is in the form of compression spring or a tension spring.

13. Sensor unit, in particular for turbidity measurement, comprising a sensor positioning device (1) and a sensor (6),
**characterized in that**
the sensor positioning device (1) is configured according to any one of claims 1 to 12 and
**in that** the sensor (6) is arranged in the cavity of the sensor mount (3) of the sensor positioning device (1).

14. Sensor unit according to claim 13,
**characterized in that**
the sensor (6) is formed with at least two fiber optic cables (16), which are arranged in the sensor mount (3) of the sensor positioning device,
and **in that** the at least two fiber optic cables (16) each have a free end which is held inside the sensor mount (3) of the sensor positioning device by a holding device (17) in a position facing the stop (8) of the measuring nozzle (7) of the sensor positioning device (1).

15. Sensor unit according to claim 14,
**characterized in that**
when the measuring nozzle (7) of the sensor positioning device (1) is arranged on the holding assembly (2) of the sensor positioning device (1) the free ends of the fiber optic cables (16) bear directly on the stop (8).

16. Sensor unit according to any one of claims 13 to 15,
**characterized in that**
the at least two fiber optic cables (16) are arranged such that a common optical intersection point is formed in the extension of the free ends of the fiber optic cables (16) along an extension axis, in particular a common intersection point is formed when the measuring nozzle (7) is arranged on the holding assembly (2), on the side of the stop (8) of the measuring nozzle (7) of the sensor measuring device (1) facing away from the free ends of the fiber optic cables (16).

## Revendications

1. Dispositif de positionnement de capteur (1), avec
un ensemble de maintien (2), lequel présente un logement de capteur (3), un élément de fixation et un élément de ressort (5),
dans lequel le logement de capteur (3) présente une cavité destinée à recevoir un capteur (6), en particulier un capteur optique (6),
dans lequel
le logement de capteur (3) est monté de manière déplaçable par rapport à l'élément de fixation le long d'un axe de compensation et
dans lequel
l'élément de ressort (5) est disposé entre l'élément de fixation et le logement de capteur (3) en coopération avec ceux-ci pour former une force de rappel lors du déplacement du logement de capteur (3) par rapport à l'élément de fixation le long de l'axe de compensation,
dans lequel le dispositif de positionnement de capteur (1) présente une tubulure de mesure (7) avec une butée (8), dans lequel la tubulure de mesure (7) est conçue pour être disposée sur un récipient de traitement (9),
dans lequel la tubulure de mesure (7) est conçue pour être disposée de manière amovible sur l'ensemble de maintien (2),
dans lequel le dispositif de positionnement de capteur (1) est conçu de sorte que, lorsque la tubulure de mesure (7) est disposée sur l'ensemble de maintien (2), le logement de capteur (3) est déplaçable par rapport à l'élément de fixation le long de l'axe de compensation,
**caractérisé en ce qu'**une force de pression du logement de capteur (3) sur la butée (8) de la tubulure de mesure (7) est formée au moyen de l'élément de ressort (5).

2. Dispositif de positionnement de capteur (1) selon la revendication 1,
**caractérisé en ce que**
l'élément de fixation forme un manchon de couplage et la tubulure de mesure (7) un coupleur ou l'élément de fixation forme un coupleur et la tubulure de mesure (7) un manchon de couplage,
dans lequel le coupleur est conçu de manière insérable dans le manchon de couplage,
**en ce que** le dispositif de positionnement de capteur présente un dispositif de verrouillage, dans lequel le dispositif de verrouillage est conçu pour verrouiller, dans une position de verrouillage, le coupleur par complémentarité de forme avec le manchon de couplage et
**en ce que** le dispositif de verrouillage est conçu pour, dans une position de déverrouillage,
déverrouiller le coupleur et le manchon de couplage.

3. Dispositif de positionnement de capteur (1) selon la revendication 1 ou la revendication 2,
**caractérisé en ce que**
la cavité du logement de capteur (3) est fermée d'un côté par un élément optique, en particulier une fenêtre de mesure (14) du logement de capteur (3).

4. Dispositif de positionnement de capteur (1) selon la revendication 3,
**caractérisé en ce que**
l'élément optique du logement de capteur (3) est conçu de manière à reposer sur la butée (8) de la tubulure de mesure (7) lorsque la tubulure de mesure (7) est disposée sur l'ensemble de maintien (2), en particulier que lorsque la tubulure de mesure (7) est disposée sur l'ensemble de maintien (2), l'élément optique du logement de capteur (3) chevauche au moins partiellement, de préférence entièrement, la butée (8) de la tubulure de mesure (7).

5. Dispositif de positionnement de capteur (1) selon l'une quelconque des revendications précédentes,
**caractérisé en ce que**
la butée de la tubulure de mesure présente une fenêtre de mesure, en particulier est conçue en tant que fenêtre de mesure.

6. Dispositif de positionnement de capteur (1) selon l'une quelconque des revendications précédentes,
**caractérisé en ce que**
l'élément de fixation renferme le logement de capteur (3) au moins lorsque la tubulure de mesure (7) est disposée sur l'ensemble de maintien (2).

7. Dispositif de positionnement de capteur (1) selon l'une quelconque des revendications précédentes,
**caractérisé en ce que**
la tubulure de mesure (7) et l'ensemble de maintien (2) sont disposés de manière concentrique lorsque la tubulure de mesure (7) est disposée sur l'ensemble de maintien (2), en particulier que l'élément de fixation, le logement de capteur (3) et la tubulure de mesure (7) sont disposés de manière concentrique.

8. Dispositif de positionnement de capteur (1) selon l'une quelconque des revendications précédentes,
**caractérisé en ce que**
les éléments de l'ensemble de maintien (2) sont conçus de manière inséparable, de sorte que l'ensemble peut être disposé en tant que tel sur la tubulure de mesure (7) et est amovible de celle-ci.

9. Dispositif de positionnement de capteur (1) selon l'une quelconque des revendications précédentes,
**caractérisé en ce que**
le logement de capteur (3) est de forme cylindrique, en particulier en tant que cylindre circulaire,

10. Dispositif de positionnement de capteur (1) selon l'une quelconque des revendications précédentes,
**caractérisé en ce que**
la tubulure de mesure (7) est conçue de manière amovible par l'intermédiaire d'une connexion de couplage rapide, d'une connexion par enclenchement, d'une connexion à baïonnette ou d'une connexion à vis pour être disposée sur l'ensemble de maintien (2).

11. Dispositif de positionnement de capteur (1) selon l'une quelconque des revendications précédentes,
**caractérisé en ce que**
l'ensemble de maintien (2) est conçu pour disposer la tubulure de mesure (7) par l'intermédiaire d'une connexion de couplage rapide, d'une connexion par enclenchement, d'une connexion à baïonnette ou d'une connexion à vis.

12. Dispositif de positionnement de capteur selon l'une quelconque des revendications précédentes,
**caractérisé en ce que**
l'élément de ressort (5) est conçu comme un ressort de pression ou comme un ressort de traction.

13. Unité de capteur, en particulier pour la mesure de turbidité, avec un dispositif de positionnement de capteur (1) et un capteur (6).
**caractérisée en ce que**
le dispositif de positionnement de capteur (1) est conçu selon l'une quelconque des revendications 1 à 12 et
le capteur (6) est disposé dans la cavité du logement de capteur (3) du dispositif de positionnement de capteur (1).

14. Unité de capteur selon la revendication 13,
**caractérisée en ce que**
le capteur (6) est conçu avec au moins deux fibres optiques (16), lesquelles sont disposées dans le logement de capteur (3) du dispositif de positionnement de capteur
et **en ce que** les au moins deux fibres optiques (16) présentent respectivement une extrémité libre, laquelle est maintenue à l'intérieur du logement de capteur (3) du dispositif de positionnement de capteur avec un appareil de maintien (17) dans une position tournée vers la butée (8) de la tubulure de mesure (7) du dispositif de positionnement de capteur (1).

15. Unité de capteur selon la revendication 14,
**caractérisée en ce que**
lorsque la tubulure de mesure (7) du dispositif de positionnement de capteur (1) est disposée sur l'ensemble de maintien (2) du dispositif de positionnement de capteur (1), les extrémités libres des fibres optiques (16) reposent directement sur la butée (8).

16. Unité de capteur selon l'une quelconque des revendications 13 à 15,
**caractérisée en ce que**
les au moins deux fibres optiques (16) sont disposées de sorte qu'un point d'intersection optique commun se forme dans le prolongement des extrémités libres des fibres optiques (16) le long d'un axe de prolongement, en particulier un point d'intersection commun se forme lorsque la tubulure de mesure (7) est disposée sur l'ensemble de maintien (2), sur le côté de la butée (8) de la tubulure de mesure (7) du dispositif de positionnement de capteur (1) opposé aux extrémités libres des fibres optiques (16).
